# EUROPÄISCHE PATENTSCHRIFT

(11) **EP 2 733 910 B1**
(45) Veröffentlichungstag und Bekanntmachung des Hinweises auf die Patenterteilung: **26.09.2018**
(21) Anmeldenummer: 13192977.0
(22) Anmeldetag: 14.11.2013
(51) Int. Cl.: H04L 12/403, H04L 12/40, H04L 12/911, H04L 29/12, H04L 12/24, G06F 12/06

(54) **BUS-System, Verfahren zum Betrieb eines BUS-Systems und fluidisches System mit einem BUS-System**
BUS system, method for operating a BUS system and fluid system with a BUS system
Système bus, procédé de fonctionnement d'un système bus et système fluidique doté d'un système bus

(30) Priorität: 14.11.2012 DE 102012022299
(43) Veröffentlichungstag der Anmeldung: 21.05.2014
(73) Patentinhaber: Bürkert Werke GmbH, 74653 Ingelfingen (DE)
(72) Erfinder: Schmötzer, Ralf, 74677 Dörzbach (DE); Haaf, Volker, 74564 Crailsheim (DE); Fischer, Marcus, 74196 Neuenstadt OT Stein (DE); Krauß, Jochen, 74653 Künzelsau (DE); Frölich, Jochen, 74629 Pfedelbach (DE)
(74) Vertreter: Prinz & Partner mbB

(56) Entgegenhaltungen:
- DE-A1- 19 713 240
- US-A- 5 745 699

## Beschreibung

### GEBIET DER ERFINDUNG

Die Erfindung betrifft ein BUS-System mit einer Vielzahl von Teilnehmern, ein Verfahren zum Betrieb eines BUS-Systems und ein fluidisches System mit einem solchen BUS-System.

### TECHNISCHER HINTERGRUND

Die Teilnehmer eines BUS-Systems, insbesondere eines Feldbus-Systems, werden vielfach mit Hilfe von DIP- oder Drehschaltern adressiert. Diese manuelle Definition der Adresse ist jedoch wenig bedienerfreundlich und verursacht vielfach einen hohen Projektierungsaufwand. Außerdem ist die manuelle Einstellung von Adressen fehleranfällig, da versehentlich zwei identische Adressen vergeben werden können. Die DIP- oder Drehschalter benötigen Platz in den über das BUS-System verbundenen Komponenten und erhöhen deren Kosten. Eine in der internationalen Klassifizierung festgelegte IP65 Schutzfähigkeit der Komponenten kann außerdem vielfach nur mit hohem Aufwand und zusätzlichen Kosten, z.B. durch zusätzliche Gehäuse oder Abdeckungen, erreicht werden. Viele Geräte oder Komponenten, wie sie z.B. in fluidischen Systemen verwendet werden, sind außerdem herstellerseitig mit einer festen Adresse versehen. Diese muss bei der Vergabe der Adressen der übrigen Komponenten des BUS-Systems berücksichtigt oder manuell umgesetzt werden.

Es sind Verfahren zur Autoadressierung von Komponenten von BUS-Systemen bekannt, welche nach dem Master-Slave-Prinzip arbeiten. Dabei weist eine Mastereinheit den Slave-Einheiten des BUS-Systems ihre Adressen zu. Bei BUS-Systemen, welche entsprechend dem CAN-BUS-Standard arbeiten und CANopen als Kommunikationsprotokoll verwenden, erfolgt die Adressierung nach dem Master-Slave-Prinzip, basierend auf LSS-Protokollen. Gemäß einem anderen aber ebenfalls aufwändigen Verfahren wird jedem Teilnehmer des BUS-Systems eine Adresse über eine externe Steuerung in einem azyklischen Service zugewiesen.

Aus der DE 197 13 240 A1 ist ein BUS-System bekannt, welches ebenfalls nach dem Master-Slave-Prinzip arbeitet. Ferner ist aus der US 5 745 699 A ein drahtloses Netzwerk bekannt.

Nachteilig an den bekannten BUS-Systemen ist jedoch, dass diese im Hinblick auf die Anzahl und Art der Busteilnehmer (Slaves) nicht einfach genug erweitert oder verändert werden können.

### ZUSAMMENFASSUNG

Es ist eine Aufgabe der vorliegenden Erfindung ein verbessertes BUS-System, ein verbessertes Verfahren zum Betrieb eines BUS-Systems und ein verbessertes fluidisches System mit einem solchen BUS-System anzugeben.

Die Aufgabe wird durch die Gegenstände der Ansprüche 1 und 13 gelöst.

Gemäß einem Aspekt der Erfindung wird ein BUS-System mit einer Vielzahl von Teilnehmern angegeben. Den Teilnehmern des BUS-Systems werden Informationen bezüglich einer Zuordnungseigenschaft von anderen Teilnehmern einer Gruppe von Teilnehmern des BUS-Systems übermittelt. Die entsprechenden Teilnehmer der Gruppe können diese Informationen selbst übermitteln.

Die Informationen bezüglich der Zuordnungseigenschaft der Teilnehmer kann die jeweilige Adresse dieser Teilnehmer sein. Insbesondere können die Teilnehmer der Gruppe des BUS-Systems dazu ausgelegt sein, die empfangenen Informationen bezüglich der Zuordnungseigenschaft der anderen Teilnehmer, also insbesondere die Adressen (d.h. die Adressen der Teilnehmer im Bussystem oder auch Netzwerk oder auch Netzwerkadressen) der anderen Teilnehmer, als vollständige Grundlage für die Kommunikation mit diesen Teilnehmern innerhalb des BUS-Systems kumulativ zu speichern und zu hinterlegen. Die Teilnehmer können dazu ausgelegt sein, diese Informationen lokal zu speichern. Umfasst die Gruppe von Teilnehmern, gemäß einer Ausführungsform, alle Teilnehmer des BUS-Systems, so liegt in jedem der Teilnehmer die vollständige, für die Kommunikation innerhalb des BUS-Systems notwendige Information vor. Mit anderen Worten kann jeder Teilnehmer über eine vollständige Liste der Adressen aller anderen Teilnehmer des BUS-Systems verfügen. Auf einen Teilnehmer mit Master-Funktionalität, auch als Mastereinheit bezeichnet, kann in einem solchen BUS-System verzichtet werden. Vorteilhaft können alle Teilnehmer des BUS-Systems über die gleiche Netzwerkfunktionalität verfügen. Das BUS-System ist in der Lage sich im Hinblick auf die Adressvergabe selbst zu konfigurieren. Dies erleichtert die Erweiterung und Verkleinerung des BUS-Systems als auch den Austausch und die Integration der Teilnehmer.

Gemäß einer weiteren Ausführungsform benötigen die Teilnehmer auch kein externes Trigger-Signal, welches sie dazu anhält, Informationen über ihre Zuordnungseigenschaft, also beispielsweise ihre Adresse, an die übrigen Teilnehmer zu kommunizieren. Insbesondere ist keine Master-Einheit notwendig, welche ein solches Trigger-Signal senden könnte. Ein Teilnehmer des BUS-Systems kann z.B. dazu ausgelegt sein, Informationen über seine Zuordnungseigenschaft zu senden, nachdem er eine Versorgungsspannung detektiert hat.

Das BUS-System kann, gemäß einer weiteren Ausführungsform, ein Feldbus-System sein. Insbesondere kann es sich um ein CAN basiertes Feldbus-System handeln bzw. um ein BUS-System, welche zu CAN kompatibel ist. Als Kommunikationsprotokoll kann CANopen oder ein zu CANopen kompatibles Kommunikationsprotokoll verwendet werden.

In einem CANopen-Netzwerk ist gemäß dem Stand der Technik immer ein NMT-Master (NMT=Network Management) vorhanden, die übrigen Teilnehmer sind NMT-Slaves. Der NMT-Master hat die vollständige Kontrolle über die Slave-Teilnehmer und kann beispielsweise deren Betriebszustand ändern. Beispielsweise kann der NMT-Master die Slave-Teilnehmer in einen der im CANopen-Standard definierten Zustände "Initialisierung", "Pre-Operational", "Operational" und "Stopped" setzen oder den Zustand eines Slave-Teilnehmers verändern. Im Zustand "Pre-Operational" können die Slave-Teilnehmer gemäß dem CANopen-Standard nur über SDO-Nachrichten (SDO=Service Data Object) kommunizieren. Im Zustand "Stopped" kommunizieren die Teilnehmer ausschließlich über NMT- und Heartbeat-Nachrichten. Sie können weder PDO-Nachrichten (PDO=Process Data Objects) noch Emergency-Nachrichten versenden. Das Standardprinzip zur Adressvergabe in einem CANopen-Netzwerk ist die Verwendung eines LSS-Masters, welcher den Teilnehmern des Netzwerks unter Verwendung von LSS-Protokollen eine entsprechende Adresse zuweist.

Gemäß einer Ausführungsform sind jedoch alle Teilnehmer des BUS-Systems mit einer gleichwertigen Netzwerkfunktionalität ausgestattet. Mit anderen Worten können also alle Teilnehmer beispielsweise die Funktionalität eines NMT-Masters aufweisen, und z.B. sich selbst oder andere Teilnehmer in einen anderen Betriebszustand setzten. Außerdem können die Teilnehmer des BUS-Systems beispielsweise keiner Beschränkung hinsichtlich des Typs der von ihnen versendeten Nachrichten unterliegen. Um eine entsprechende Nachricht zu versenden, können die Teilnehmer beispielsweise selbständig ihren Zustand ändern. Ebenso wie die Teilnehmer des BUS-Systems, entsprechend ihrer Netzwerkfunktionalität, als Master-Einheiten angesehen werden können, können in ähnlicher Weise auch alle Teilnehmer als Slave-Einheiten angesehen werden. Eine Unterscheidung in Master- und Slave-Einheiten ist in diesem Zusammenhang wenig aussagekräftig und soll auch nicht getroffen werden, da die Teilnehmer des BUS-Systems mit einer gleichwertigen Netzwerkfunktionalität ausgestattet sein können.

Die Teilnehmer des BUS-Systems können außerdem dazu ausgelegt sein, Informationen über eine Verknüpfung zwischen der Zuordnungseigenschaft eines Teilnehmers und einer Identität oder Kennung dieses Teilnehmers kumulativ zu speichern. Eine solche Identität oder Kennung des Teilnehmers kann dessen Hardwareadresse aber auch z.B. eine zugewiesene Messstellenbezeichnung sein. Diese Informationen können lokal in den Teilnehmern hinterlegt sein, welche entsprechend eingerichtet sein können.

Die Gruppe von Teilnehmern kann alle Teilnehmer des BUS-Systems umfassen, so dass vorteilhaft sämtliche Adressen innerhalb des BUS-Systems automatisch zugewiesen werden können.

Gemäß einer weiteren Ausführungsform können die Teilnehmer außerdem dazu ausgelegt sein, eine zufällige vorläufige eigene Adresse derart zu generieren, dass diese von jeder der kumulativ gespeicherten Adressen der anderen Teilnehmer verschieden ist. So kann vermieden werden, dass Adressen doppelt vergeben werden.

Die Teilnehmer des BUS-Systems können dazu ausgelegt sein, ihre Adresse in einem Adress-Telegramm an die übrigen Teilnehmer des BUS-Systems zu übermitteln. Bei einem Adress-Telegramm kann es sich um ein Telegramm entsprechend dem CAN-Standard bzw. entsprechend dem CANopen Kommunikationsprotokoll handeln. Insbesondere kann das Adress-Telegramm ein entsprechend eingerichteter Daten-Frame entsprechend dem CAN-Standard sein.

Das Adress-Telegramm kann neben Informationen über eine Zuordnungseigenschaft des absendenden Teilnehmers Informationen bezüglich eines Hierarchie-Status dieses Teilnehmers umfassen. Der Hierarchie-Status bestimmt bevorzugt einen Rang oder hierarchischen Platz des entsprechenden Teilnehmers innerhalb einer Gesamt-Hierarchie der Teilnehmer des BUS-Systems. Als Kriterium für die Ermittlung eines Hierarchie-Status eines bestimmten Teilnehmers kann z.B. dessen aktueller Betriebs-Status oder -Zustand, dessen Hardwareadresse, Seriennummer oder auch jede beliebige andere geeignete Information über diesen Teilnehmer verwendet werden.

Gemäß einer weiteren Ausführungsform ist zumindest ein Empfänger des Adress-Telegramms dazu ausgelegt, die in dem empfangenen Adress-Telegramm vorhandene Adresse auf einen Konflikt mit seiner eigenen vorläufigen Adresse zu überprüfen. Tritt ein Konflikt auf, so kann dieser Konflikt beispielsweise anhand eines Wertes einer Seriennummer, einer Herstellernummer oder eines anderen Qualifizierungsmerkmales der miteinander in Konflikt stehenden Teilnehmer gelöst werden. Beispielsweise kann eine niedrigere Seriennummer oder Herstellernummer für eine höhere Priorität stehen. Mit anderen Worten kann sich also derjenige Teilnehmer, welcher die geringere oder kleinere Seriennummer aufweist gegen denjenigen Teilnehmer, welcher die höhere Seriennummer oder Herstellernummer aufweist, in Bezug auf die Vergabe der Adressen durchsetzen. Eine weitere Möglichkeit, den Konflikt zwischen zwei Adressen aufzulösen, ist ein Vergleich zwischen dem Hierarchie-Status des Senders (der das Adress-Telegramm versendende Teilnehmer des BUS-Systems) und dem Hierarchie-Status des Empfängers (der das Adress-Telegramm empfangende Teilnehmer des BUS-Systems). In beiden Fällen gibt der unterlegene Teilnehmer seine Adresse auf, der im Vergleich überlegene Teilnehmer behält seine Adresse. Die Erzeugung und Auswahl einer neuen vorläufigen Adresse durch den unterlegenen Teilnehmer erfolgt in beiden Fällen der Konfliktbeseitigung in ähnlicher Art und Weise.

Wird, gemäß einer Ausführungsform, der Konflikt der Adressen anhand des Hierarchie-Status der Teilnehmer gelöst, kann der Empfänger des Adress-Telegramms die in dem empfangenen Adress-Telegramm vorhandene Statusinformation bezüglich des Hierarchie-Status des Absenders zunächst auslesen. Falls der Hierarchie-Status des Empfängers einen geringeren Rang in einer Gesamt-Hierarchie des BUS-Systems aufweist als der in dem Adress-Telegramm genannte Hierarchie-Status des Absenders, kann der Empfänger seine eigene vorläufige Adresse aufgeben. Anschließend kann er eine neue zufällige vorläufige Adresse generieren, und diese in einem weiteren Adress-Telegramm an die übrigen Teilnehmer des BUS-Systems zu kommunizieren. Mit anderen Worten gibt also der im Hierarchie-Vergleich unterlegene Teilnehmer seine Adresse auf.

Im umgekehrten Fall, in dem der Hierarchie-Status des Empfängers einen höheren Rang in einer Gesamt-Hierarchie des BUS-Systems aufweist als der in dem Adress-Telegramm genannte Hierarchie-Status des Absenders, behält der Empfänger seine Adresse bei. Er verteidigt seine Adresse, indem er keine Änderung vornimmt und die eigene (unveränderte) Adresse in einem weiteren Adress-Telegramm an die übrigen Teilnehmer des BUS-Systems kommuniziert.

Um Konflikten zwischen den Adressen der einzelnen Teilnehmer vorzubeugen, können diese dazu ausgelegt sein, ein Adress-Telegramm erst nach Ablauf einer zufällig ermittelten ersten Wartezeit an die übrigen Teilnehmer des BUS-Systems zu kommunizieren. Diese erste Wartezeit kann zwischen 40 ms und 2,8 s liegen und z.B. mit Hilfe eines Zufallsgenerators bestimmt werden. Als Basis für den Zufallsgenerator kann z. B. eine Prozessornummer oder -adresse oder eine Fertigungsnummer des betreffenden Teilnehmers aber auch ein an einem Eingang des Teilnehmers ermitteltes externes Signal oder Ereignis, z.B. ein Rauschen herangezogen werden.

Nachdem die Teilnehmer des BUS-Systems zumindest ein erstes Adress-Telegramm versendet haben und die eigene Adresse vorläufig festgelegt haben, kann diese in einem weiteren Schritt verifiziert werden.

Dazu können die Teilnehmer, gemäß einer weiteren Ausführungsform, dazu ausgelegt sein, nachdem sie zumindest ein erstes Adress-Telegramm gesendet haben, eine zufällig ermittelte zweite Wartezeit einzuhalten. Die zweite Wartezeit kann auf gleiche oder ähnliche Art und Weise wie die erste Wartezeit ermittelt werden und insbesondere zwischen 40 ms und 630 ms liegen. Während dieser zweiten Wartezeit kann der Teilnehmer eingehende Adress-Telegramme anderer Teilnehmer im Hinblick auf einen Konflikt mit der eigenen vorläufigen Adresse überprüfen. Falls er innerhalb der zweiten oder einer weiteren Wartezeit kein Adress-Telegramm empfängt, welches einen Konflikt auslöst, kann er seine vorläufige Adresse als feste Adresse festzulegen.

Tritt hingegen während der zweiten Wartezeit ein Konflikt auf, so kann der Teilnehmer ferner dazu ausgelegt sein, diesen Konflikt erneut anhand eines Vergleichs z. B. der Seriennummer oder Herstellernummer und / oder anhand eines Vergleichs zwischen dem eigenen Hierarchie-Status und einem Hierarchie-Status des Absenders zu lösen. Die einzelnen Schritte dieser Konfliktlösung können gleich oder ähnlich zu der oben beschriebenen Konfliktlösung durchgeführt werden.

Festgelegte Adressen können die Teilnehmer des BUS-Systems verteidigen; dies kann auch für voreingestellte oder im Rahmen einer früheren Adressvergabe festgelegte Adressen gelten. Gemäß einer weiteren vorteilhaften Ausführungsform können die Teilnehmer des BUS-Systems dazu ausgelegt sein, in Reaktion auf ein Adress-Telegramm eines weiteren Teilnehmers, welches eine Adresse umfasst, die mit ihrer festen Adresse in Konflikt steht, die eigene feste Adresse beizubehalten. Die Teilnehmer können in Reaktion darauf ein Adress-Telegramm an die übrigen Teilnehmer des BUS-Systems übermitteln, welches ihre feste Adresse umfasst.

Gemäß einem weiteren Aspekt der Erfindung wird außerdem ein fluidisches System angegeben, welches ein BUS-System gemäß den vorstehend erwähnten Aspekten der Erfindung umfasst. Insbesondere kann es sich bei den Teilnehmern dieses BUS-Systems um fluidische Komponenten, wie z.B. Ventile, Sensoren oder Messgeräte, handeln.

Gemäß einem weiteren Aspekt der Erfindung wird ein Verfahren zum Betrieb eines BUS-Systems mit einer Vielzahl von Teilnehmern angegeben. Den Teilnehmern des BUS-Systems werden Informationen bezüglich einer Zuordnungseigenschaft von anderen Teilnehmern einer Gruppe des BUS-Systems und von den entsprechenden Teilnehmern der Gruppe selbst übermittelt. Insbesondere kann die Information bezüglich der Zuordnungseigenschaft der Teilnehmer eine Adresse dieser Teilnehmer innerhalb des BUS-Systems sein.

Gemäß einer Ausführungsform können die Teilnehmer der Gruppe des BUS-Systems die empfangenen Informationen bezüglich der Zuordnungseigenschaft der anderen Teilnehmer als vollständige Grundlage für eine Kommunikation mit diesen Teilnehmern innerhalb des BUS-Systems kumulativ speichern und lokal hinterlegen. Insbesondere kann die Gruppe alle Teilnehmer des BUS-Systems umfassen. Die Teilnehmer des BUS-Systems können hinsichtlich ihrer Netzwerkfunktionalität gleichwertig sein. Insbesondere kann das BUS-System keinen Teilnehmer umfassen, welcher entsprechend einer Master-Funktionalität arbeitet.

Gleiche oder ähnliche Vorteile, wie sie bereits im Hinblick auf das BUS-System gemäß Aspekten der Erfindung erwähnt wurden, treffen auf das fluidische System sowie auf das Verfahren zum Betrieb des BUS-Systems in gleicher oder ähnlicher Weise zu und sollen aus diesem Grund nicht wiederholt werden.

### KURZE BESCHREIBUNG DER ZEICHNUNGEN

Weitere vorteilhafte Aspekte der Erfindung ergeben sich aus der folgenden Beschreibung bevorzugter Ausführungsbeispiele unter Bezugnahme auf die Zeichnungen. In den Zeichnungen zeigt:
FIG. 1 eine schematische Darstellung eines fluidischen Systems, welches ein BUS-System umfasst, gemäß einem Ausführungsbeispiel,
FIG. 2 bis 6 Abschnitte eines Ablaufdiagramms, welches Verfahren zum Betrieb eines BUS-Systems gemäß mehrerer Ausführungsbeispiele darstellt, und
FIG. 7 ein Adress-Telegramm gemäß einem Ausführungsbeispiel.

### DETAILLIERTE BESCHREIBUNG DER AUSFÜHRUNGSBEISPIELE

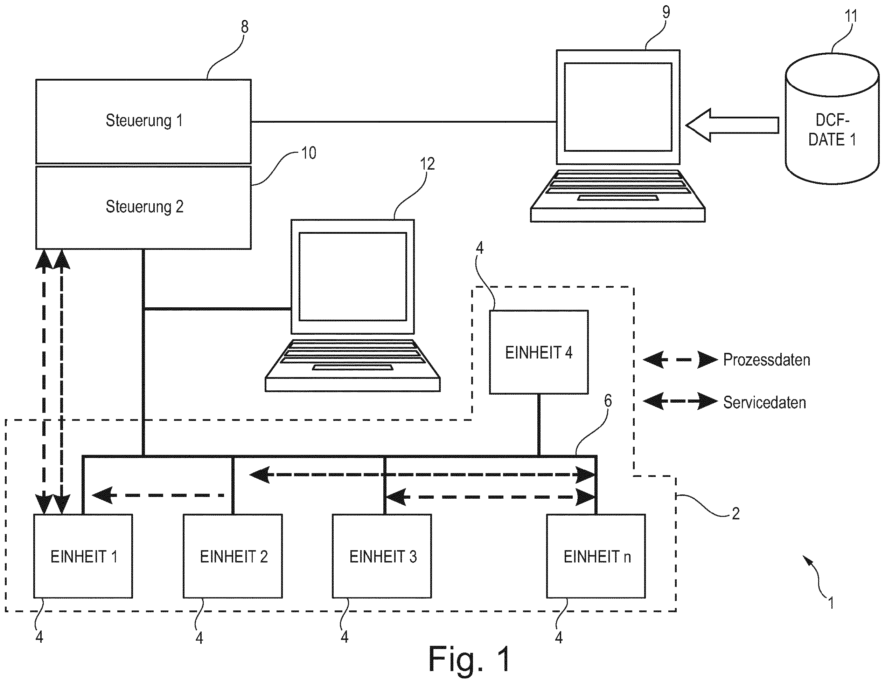

FIG. 1 zeigt eine schematische und vereinfachte Darstellung eines fluidischen Systems 1, gemäß einem Ausführungsbeispiel. Dieses umfasst ein BUS-System 2 gemäß einem Ausführungsbeispiel. Das BUS-System 2 umfasst eine Vielzahl von Teilnehmern 4, bezeichnet mit "Einheit 1" bis "Einheit n". Die Anzahl der Teilnehmer 4 ist lediglich durch das Kommunikationsprotokoll des BUS-Systems 2 begrenzt. Das BUS-System 2 kann ein asynchron, seriell arbeitendes BUS-System, insbesondere ein Feldbus-System sein. Insbesondere kann es sich bei dem BUS-System 2 um ein CAN-BUS-System (CAN=Controller Area Network) handeln, welches entsprechend dem CAN-Standard arbeitet. Als Kommunikationsprotokoll kann beispielsweise CANopen verwendet werden, welches entsprechend dem von der CiA festgelegten Standard arbeitet (CiA=CAN in Automation).

Bei den Teilnehmern 4, welche mit einer Datenleitung 6 untereinander verbunden sind, kann es sich insbesondere um fluidische Komponenten des fluidischen Systems 1 handeln. Wie bei den CAN basierten BUS-Systemen üblich, kann als Datenleitung 6 eine zwei- bzw. vieradrige Kupferleitung verwendet werden. Bei den fluidischen Komponenten kann es sich z.B. um Ventile, Sensoren, Messgeräte, Regelgeräte, Aktoren, Regler, etc. handeln. Ebenso kann es sich bei Teilnehmern 4 um Anzeigevorrichtungen, Steuereinheiten oder Gateways zur Programmierung oder Überwachung des fluidischen Systems 1 handeln.

Die Teilnehmer 4 des BUS-Systems 2 können sowohl unidirektional als auch bidirektional miteinander kommunizieren. Es können sowohl Servicedaten als auch Prozessdaten übermittelt werden. Dies ist mit entsprechenden Pfeilen in FIG. 1 angedeutet. Handelt es sich um ein CANopen basiertes BUS-System, so werden die Servicedaten in SDO-Telegrammen (SDO=Service Data Object) und die Prozessdaten in PDO-Telegrammen (PDO=Process Data Object) übertragen. Die Kommunikation ist nicht auf das BUS-System 2 selbst begrenzt. In gleicher Art und Weise können die einzelnen Teilnehmer 4 auch mit einer außerhalb angeordneten ersten Steuerung 8 (Steuerung 1) kommunizieren. Insbesondere kann eine DCF-Konfigurationsdatei (DCF=Device Configuration File) von einem Speicher 11 über einen Steuerrechner 9 und die erste Steuerung 8 an einen oder mehrere Teilnehmer 4 des BUS-Systems 2, zur Konfiguration der Teilnehmer 4, übertragen werden. Die DCF-Konfigurationsdatei dient vornehmlich der Übertragung der Geräteeinstellungen an die Teilnehmer 4.

Den Teilnehmern 4 kann eine über ihre Funktionalität entsprechend dem CAN- bzw. CANopen-Standard hinausgehende weitere Funktionalität verliehen werden. Diese weitere Funktionalität soll im Folgenden beschrieben werden, und kann den Teilnehmern 4 verliehen werden, indem diese, mittels eines weiteren Steuerrechners 12 und einer weiteren Steuerung 10 (Steuerung 2) dazu eingerichtet werden. Der Steuerrechner 12 und die weitere Steuerung 10 dienen jedoch lediglich der entsprechenden Einrichtung der Teilnehmer 4. Die über den CAN- bzw. CANopen-Standard hinausgehende weitere Funktionalität betrifft die Teilnehmer 4 selbst und wird von diesen selbst zur Verfügung gestellt, ohne dass weitere Eingriffe von Außen in das BUS-System 2 notwendig wären.

Diese weitere Funktionalität betrifft insbesondere die Fähigkeit der Teilnehmer 4 des BUS-Systems 2, selbstständig oder autonom jeweils eine eindeutige Adresse, insbesondere eine Netzwerkadresse innerhalb des BUS-Systems 2, zu generieren und sich diese selbst zuzuordnen.

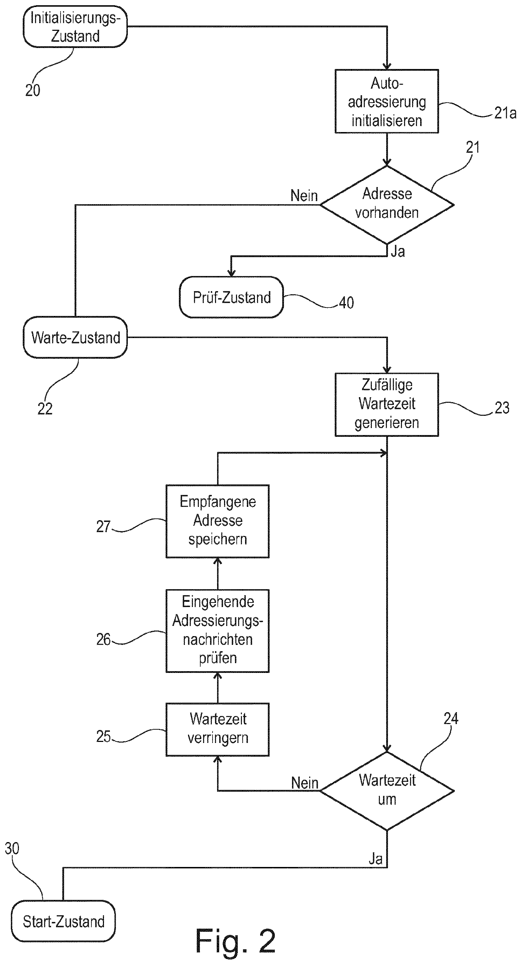

FIG. 2 zeigt einen ersten Abschnitt eines Ablaufdiagramms eines Verfahrens zur Netzwerkadressvergabe innerhalb eines BUS-Systems 2, gemäß einem Ausführungsbeispiel. Innerhalb des BUS-Systems 2 können einige, insbesondere aber alle Teilnehmer 4 zur Durchführung eines solchen Verfahrens eingerichtet sein.

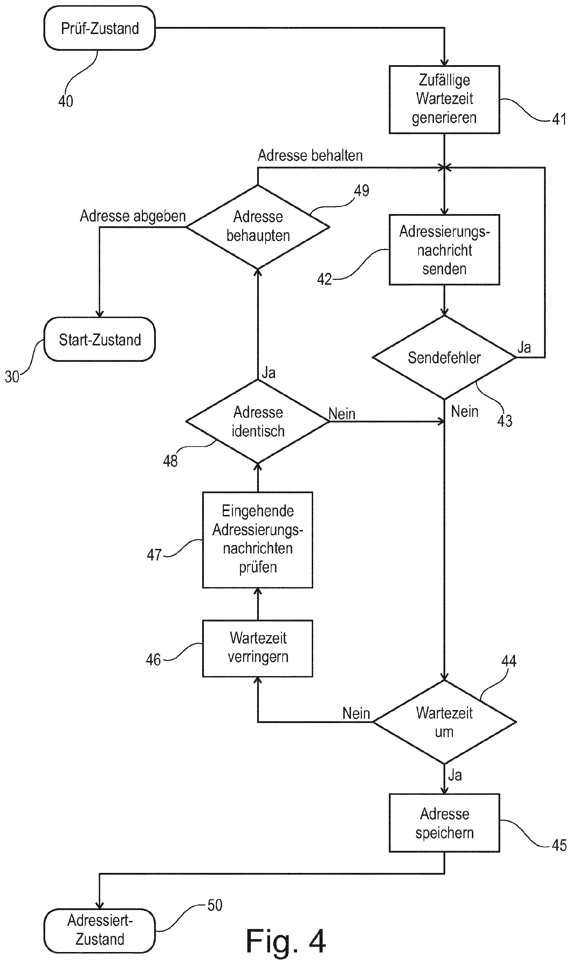

Beginnend in einem Initialisierungs-Zustand 20, initialisiert 21a ein Teilnehmer 4 des BUS-Systems 2 zunächst das im Folgenden beschriebene Verfahren zur Autoadressierung. Anschließend überprüft 21 der Teilnehmer 4, ob er bereits über eine vorbestimmte oder im Rahmen einer vorausgegangenen Adressierung festgelegte Adresse verfügt. Wenn dies der Fall ist, geht der Teilnehmer 4 direkt in einen Überprüfungsstatus oder Prüf-Zustand 40 über (siehe auch FIG. 4). Falls der Teilnehmer 4 über keine feste Adresse verfügt, tritt dieser in einen Wartestatus oder Warte-Zustand 22 ein.

In dem Warte-Zustand 22 erzeugt 23 er zunächst eine zufällige erste Wartezeit. Diese Wartezeit kann zwischen 200 ms und 2,8 s liegen. Hierzu kann der Teilnehmer 4 einen Zufallsgenerator umfassen. Als Basis für den Zufallsgenerator zur Erzeugung dieser ersten Wartezeit kann z.B. eine Prozessoridentifikationsnummer, eine Fertigungsnummer aber auch ein externes Signal oder Ereignis, wie z.B. ein an einem Eingang des Teilnehmers 4 detektiertes Rauschen, verwendet werden. Der Teilnehmer 4 überprüft 24, ob diese erste Wartezeit verstrichen ist, und tritt in einen Start-Status oder Start-Zustand 30 ein, falls dies der Fall ist. Ist die erste Wartezeit noch nicht verstrichen, so wird diese verringert 25. Außerdem kann der Teilnehmer 4 dazu ausgelegt sein, eingehende Adress-Telegramme zu empfangen und die darin enthaltenen Adressen zu überprüfen 26. Adress-Telegramme sollen im Kontext dieser Beschreibung auch als Adressierungsnachrichten bezeichnet werden. Bei einem Adress-Telegramm kann es sich um ein Telegramm entsprechend dem CAN-Standard bzw. entsprechend dem CANopen Kommunikationsprotokoll handeln. Die empfangenen Adressen können in einem internen Speicher des Teilnehmers 4 abgelegt 27 werden. Die Schritte 25 bis 27 können zyklisch bis zum Ablauf der ersten Wartezeit wiederholt werden.

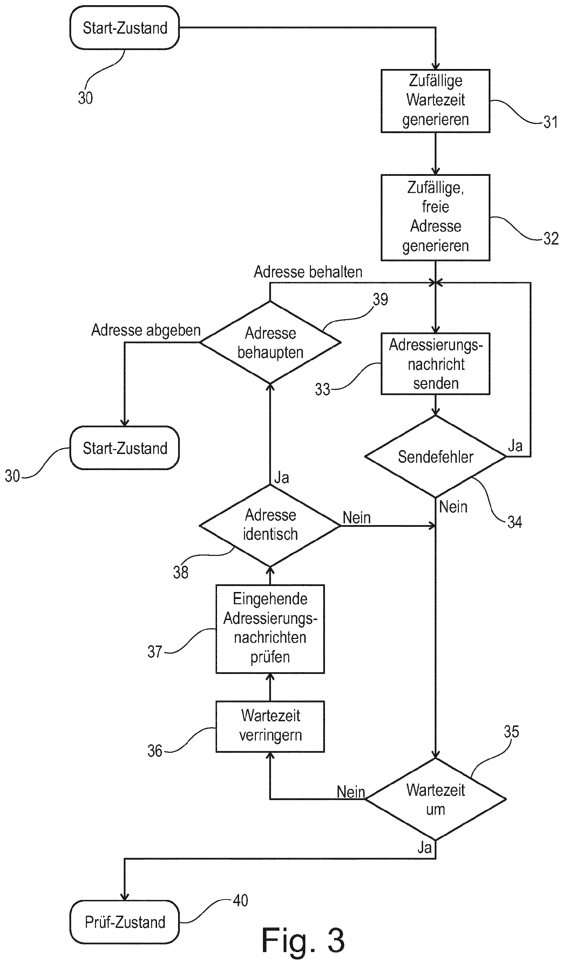

Anschließend tritt der Teilnehmer 4 in den Start-Zustand 30 über. Dieser Teil des Verfahrens ist in dem in FIG.3 dargestellten Teil des Ablaufdiagramms gezeigt. Der Teilnehmer 4 generiert 31 eine Wartezeit und erzeugt 32 eine eigene zufällige und vorläufige Adresse. Die Wartezeit kann zwischen 40 ms und 630 ms liegen. Insbesondere kann der Teilnehmer 4 dazu eingerichtet sein, eine freie oder ungenutzte Adresse zu erzeugen. Diesbezüglich wird ein Konflikt mit den in Schritt 27 (FIG. 2) gespeicherten und empfangenen Adressen anderer Teilnehmer 4 des BUS-Systems 2 vermieden. Mit anderen Worten erzeugt der Teilnehmer 4 eine eigene Adresse, welche von allen gespeicherten Adressen der andren Teilnehmer 4 verschieden ist.

Anschließend sendet 33 der Teilnehmer 4 seine vorläufige und zufällige Adresse in einem Adress-Telegramm an die übrigen Teilnehmer 4 des BUS-Systems 2. Tritt bei der Übertragung des Adress-Telegramms ein Übertragungsfehler oder Sendefehler auf 34, wird das Adress-Telegramm erneut versendet 33. Der Teilnehmer 4 überprüft 35, ob die in Schritt 31 erzeugte Wartezeit verstrichen ist. Wenn dies der Fall ist, tritt der Teilnehmer 4 direkt in den Überprüfungszustand oder Prüf-Zustand 40 ein. Ist die Wartezeit noch nicht verstrichen, so wird diese verringert 36 und der Teilnehmer 4 empfängt und überprüft 37 weiterhin die Adressen in den empfangenen Adress-Telegrammen.

Die empfangenen Adressen werden auf einen Konflikt mit der eigenen vorläufigen Adresse des Teilnehmers 4 überprüft 38. Sofern kein Konflikt vorliegt, durchläuft das Verfahren die Schritte 35 bis 38 bis zum Ablauf der Wartezeit. Tritt ein Konflikt zwischen einer empfangenen Adresse und der eigenen vorläufigen Adresse des Teilnehmers 4 auf, so kann dieser Konflikt wahlweise anhand eine Vergleichs der Seriennummern oder Herstellernummern oder anhand eines Vergleichs zwischen dem Hierarchie-Status des Senders und dem Hierarchie-Status des Empfängers gelöst werden. Dabei kann eine niedrigere Seriennummer oder eine niedrigere bzw. geringere Herstellernummer für eine höhere Priorität stehen. Selbstverständlich kann auch eine umgekehrte Definition getroffen werden, so dass eine höhere Seriennummer oder eine größere Herstellernummer für eine höhere Priorität steht. Mit anderen Worten kann sich also der Teilnehmer mit einer geringeren Hersteller- oder Seriennummer gegen denjenigen Teilnehmer mit einer höheren Hersteller- bzw. Seriennummer durchsetzen. Der Teilnehmer 4 mit der geringeren Hersteller- oder Seriennummer verteidigt und behält seine Adresse, während der Teilnehmer 4 mit der höheren Hersteller- oder Seriennummer seine Adresse aufgibt. Dies geschieht in Schritt 39.

Wird der Konflikt der Adressen anhand des Hierarchie-Status der Teilnehmer 4 gelöst 39, liest der Teilnehmer 4 zunächst in dem Adress-Telegramm vorhandene Informationen hinsichtlich des Hierarchie-Status des Absenders. Als Kriterium für die Bestimmung des Hierarchie-Status kann beispielsweise ein Zustand oder Betriebszustand des Teilnehmers 4 herangezogen werden. Ferner kann eine Identifikationsnummer des Teilnehmers 4 die Basis für dessen Status innerhalb einer Gesamthierarchie des BUS-Systems 2 herangezogen werden. Die Teilnehmer 4 können ebenso mit einem bestimmten Hierarchie-Status versehen werden.

Der Teilnehmer 4 mit dem höheren Hierarchie-Status behält bzw. verteidigt seine Adresse und sendet 33 diese in einem weiteren Adress-Telegramm an die übrigen Teilnehmer 4 des BUS-Systems 2. Stellt der Teilnehmer 4 in Schritt 39 hingegen fest, dass er über einen niedrigeren Hierarchie-Status als der das Adress-Telegramm versendende Teilnehmer 4 verfügt, so gibt der Teilnehmer 4 seine eigene vorläufige Adresse auf und tritt erneut in den Start-Zustand 30 ein.

Hat der Teilnehmer 4 erfolgreich eine noch nicht besetzte Adresse gefunden, so wird diese in einem Überprüfungsstatus oder Prüf-Zustand 40 verifiziert. Dieser Teil des Verfahrens wird anhand des in FIG.4 gezeigten Teils des Ablaufdiagramms erläutert. Zunächst erzeugt 41 der Teilnehmer 4 eine zweite Wartezeit. Diese zufällige zweite Wartezeit kann zwischen 40 ms und 630 ms liegen. Die Überwachung der ersten als auch der zweiten Wartezeit kann mit Hilfe eines in einem Mikroprozessor vorhandenen Timers oder durch Task Managing erfolgen.

Während der Verifizierung sendet 42 der Teilnehmer 4 seine Adresse in einem weiteren Adress-Telegramm an die übrigen Teilnehmer 4 des BUS-Systems 2. Sollte bei der Übertragung des Adress-Telegramms ein Fehler auftreten 43, so wird das Adress-Telegramm erneut versandt 42. Der Teilnehmer 4 überprüft 44, ob die zweite Wartezeit verstrichen ist. Sollte dies der Fall sein, so legt der Teilnehmer 4 seine vorläufige Adresse als endgültige und feste Adresse in Schritt 45 fest. Sofern die zweite Wartezeit noch nicht abgelaufen ist, wird diese verringert 46, und der Teilnehmer 2 empfängt und überprüft 47 die eingehenden Adress-Telegramme. Wenn in diesen Adress-Telegrammen keine Adresse beansprucht wird 48, welche mit der eigenen Adresse des Teilnehmers 4 in Konflikt steht, so werden die Schritte 44 und 46 bis 48 durchlaufen, bis die zweite Wartezeit verstrichen ist. Tritt hingegen ein Konflikt mit der eigenen Adresse auf, so wird dieser Konflikt gelöst 49. Die Konfliktlösung 49 kann erneut anhand des Hierarchie-Status der Teilnehmer 4 oder anhand der Serien- oder Herstellernummer, so wie es bereits im Zusammenhang mit Schritt 39 in FIG. 3 beschrieben wurde, erfolgen. Sollte der Teilnehmer 4 gezwungen sein, seine eigene Adresse aufzugeben, so tritt er erneut in Start-Zustand 30 ein. Verteidigt der Teilnehmer 4 hingegen seine Adresse, so sendet 42 er diese in einem Adress-Telegramm erneut an die anderen Teilnehmer 4 des BUS-Systems 2. Wenn der Teilnehmer 4 seine Adresse erfolgreich festgelegt 45 hat, so tritt dieser in einen dauerhaften BetriebsZustand 50 ein, welcher auch als Adressiert-Zustand bezeichnet wird.

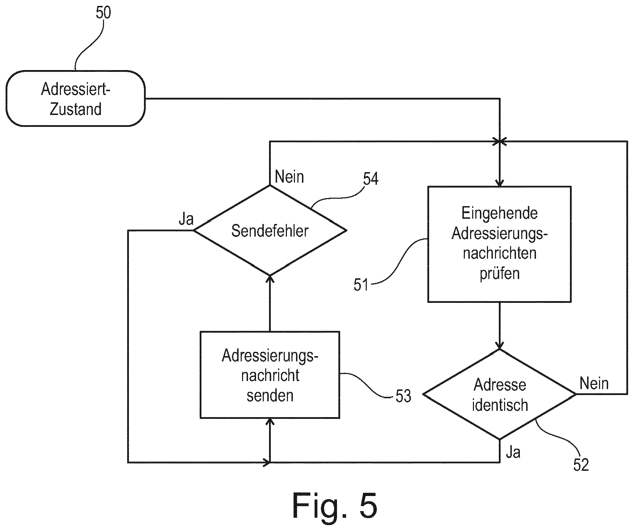

Befindet sich der Teilnehmer 4 in dem Adressiert-Zustand 50, dieser Teil des Ablaufdiagramms ist in FIG. 5 gezeigt, so verändert der Teilnehmer 4 seine festgelegte Adresse nicht mehr. Er überprüft 51 lediglich eingehende Adress-Telegramme anderer Teilnehmer 4 des BUS-Systems 2 auf die darin vorhandenen vorläufigen Adressen der anderen Teilnehmer 4. Steht eine solche vorläufige Adresse mit seiner eigenen festen Adresse in einem Konflikt 52, so sendet 53 der Teilnehmer 4 in Reaktion darauf lediglich ein Adress-Telegramm, welches die eigene feste Adresse umfasst. Falls dies nicht der Fall ist, überprüft 51 der Teilnehmer 4 weiterhin die eingehenden Adress-Telegramme. Sollte beim Senden 53 des Adress-Telegramms ein Übertragungsfehler auftreten 54, so wird das Adress-Telegramm erneut versandt.

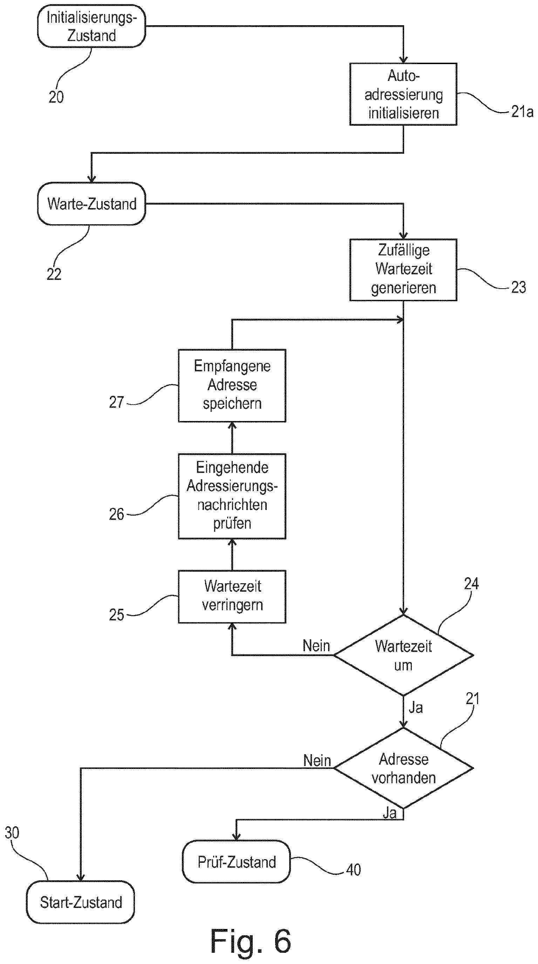

FIG. 6 zeigt einen Abschnitt eines Ablaufdiagramms, welches ein Verfahren gemäß einem weiteren Ausführungsbeispiels beschreibt. Ausgehend von einem Initialisierungszustand 20 wird zunächst das Verfahren zur Autoadressierung initialisiert 21a. Der Teilnehmer 4 geht daraufhin in den Wartezustand 22 über. Er erzeugt 23 eine zufällige erste Wartezeit, welche insbesondere in einem Intervall zwischen 200 ms und 2,8 s liegen kann. Anschließend überprüft 24 der Teilnehmer 4, ob diese erste Wartezeit verstrichen ist. Falls dies nicht der Fall ist, wird die Wartezeit verringert 25. Der Teilnehmer 4 prüft 26 eingehende Adress-Telegramme und speichert 27 die empfangenen Adressen anderer Teilnehmer 4. Die Schritte 25 bis 27 werden solange wiederholt, bis die in Schritt 23 generierte erste Wartezeit verstrichen ist. Ist dies der Fall, prüft 21 der Teilnehmer 4, ob er bereits über eine Adresse, beispielsweise eine voreingestellte Adresse verfügt. Ist dies der Fall, geht der Teilnehmer 4 direkt in den Prüf-Zustand 40 über. Sollte der Teilnehmer 4 nicht über eine Adresse verfügen, so tritt dieser in den Start-Zustand 30 ein.

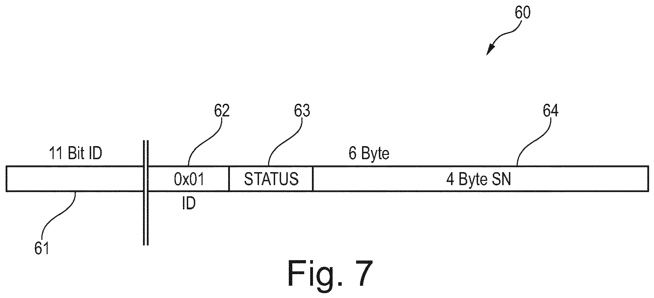

FIG. 7 zeigt ein Ausführungsbeispiel für ein Adress-Telegramm 60 in einem BUS-System 2, welches CANopen als Kommunikationsprotokoll verwendet. Das Adress-Telegramm 60 kann ein 11-Bit langes Objekt-Identifizierungsfeld 61 umfassen. Dieses Feld ist durch den CANopen-Standard nicht festgelegt und kann das Datenobjekt beschreibende Informationen enthalten. Das Feld 62 kann die Art der versendeten Nachricht kennzeichnen. Beispielsweise kann in diesem Feld 62 angegeben sein, dass es sich bei dem Adress-Telegramm 60 um eine Nachricht handelt, welche im Rahmen der beschriebenen Autoadressierung versandt wurde. Das Feld 63 kann angeben, in welchem Status oder Zustand sich der Teilnehmer 4 befindet. Beispielsweise kann ein Bit-Wert "0x04" für den Start-Zustand 30, ein Bit-Wert "0x05" für den Prüf-Zustand 40 und ein Bit-Wert "0x06" für den Betriebs- oder Adressiert-Zustand 50 stehen. Das Feld 64 kann schließlich eine bis zu 4-Bit lange Seriennummer des Teilnehmers 4 umfassen.

## Patentansprüche

1. BUS-System (2) mit einer Vielzahl von Teilnehmern (4), wobei den Teilnehmern des BUS-Systems Informationen bezüglich einer Zuordnungseigenschaft von den anderen Teilnehmern (4) einer Gruppe von Teilnehmern des BUS-Systems und von den entsprechenden Teilnehmern (4) der Gruppe selbst übermittelt werden, **dadurch gekennzeichnet, dass** es sich bei dem Bussystem um ein Feldbussystem handelt und die Gruppe alle Teilnehmer des BUS-Systems umfasst, die Teilnehmer (2) des BUS-Systems (4) hinsichtlich ihrer Netzwerkfunktionalität gleichwertig sind und die Information bezüglich der Zuordnungseigenschaft der Teilnehmer der Gruppe eine Adresse dieser Teilnehmer (4) innerhalb des BUS-Systems (2) ist und das BUS-System keinen Teilnehmer (4) mit einer Master-Funktionalität umfasst.

2. BUS-System (2) nach Anspruch 1, bei dem zumindest die Teilnehmer (4) der Gruppe des BUS-Systems (2) dazu ausgelegt sind, die empfangenen Informationen bezüglich der Zuordnungseigenschaft der anderen Teilnehmer (4) als vollständige Grundlage für eine Kommunikation mit diesen Teilnehmern (4) innerhalb des BUS-Systems (2) kumulativ zu speichern und lokal zu hinterlegen.

3. BUS-System (2) nach Anspruch 1 oder 2, bei dem die Teilnehmer (4) außerdem dazu ausgelegt sind, eine zufällige vorläufige eigene Adresse derart zu generieren, dass diese von jeder der kumulativ gespeicherten Adressen der anderen Teilnehmer (4) verschieden ist.

4. BUS-System (2) nach Anspruch 3, bei dem die Teilnehmer (4) dazu ausgelegt sind, ihre Adresse in einem Adress-Telegramm an die übrigen Teilnehmer (4) des BUS-Systems (2) zu übermitteln.

5. BUS-System nach Anspruch 4, bei dem das Adress-Telegramm außerdem Informationen über einen Hierarchie-Status des versendenden Teilnehmers innerhalb einer Gesamt-Hierarchie des BUS-Systems umfasst.

6. BUS-System nach Anspruch 5, bei dem zumindest ein Empfänger des Adress-Telegramms dazu ausgelegt ist, die in dem empfangenen Adress-Telegramm vorhandene Adresse auf einen Konflikt mit seiner eigenen vorläufigen Adresse zu überprüfen, und im Fall eines Konflikts eine in dem empfangenen Adress-Telegramm vorhandene Statusinformation des Absenders auszulesen und
a) falls der eigene Hierarchie-Status einen geringeren Rang in einer Gesamt-Hierarchie des BUS-Systems (2) aufweist als der in dem Adress-Telegramm genannte Hierarchie-Status des Absenders, die eigene vorläufige Adresse aufzugeben, eine neue zufällige vorläufige Adresse zu generieren, und in einem weiteren Adress-Telegramm an die übrigen Teilnehmer (4) des BUS-Systems (2) zu übermitteln,
b) falls der eigene Hierarchie-Status einen höheren Rang in einer Gesamt-Hierarchie des BUS-Systems (2) aufweist als der in dem Adress-Telegramm genannte Hierarchie-Status des Absenders, die eigene Adresse beizubehalten und diese beibehaltene Adresse in einem weiteren Adress-Telegramm an die übrigen Teilnehmer (2) des BUS-Systems zu übermitteln.

7. BUS-System nach Anspruch 6, bei dem die Teilnehmer (4) dazu ausgelegt sind, ein Adress-Telegramm nach Ablauf einer zufällig ermittelten ersten Wartezeit an die übrigen Teilnehmer (4) des BUS-Systems (2) zu übermitteln.

8. BUS-Systems (2) nach Anspruch 7, bei dem die Teilnehmer (4) dazu ausgelegt sind, nachdem sie zumindest ein erstes Adress-Telegramm gesendet haben, eine zufällig ermittelte zweite Wartezeit einzuhalten, während dieser zweiten Wartezeit eingehende Adress-Telegramme anderer Teilnehmer (2) im Hinblick auf einen Konflikt mit der eigenen vorläufigen Adresse zu überprüfen, und falls sie innerhalb der zweiten Wartezeit kein Adress-Telegramm empfangen, welches einen Konflikt auslöst, ihre vorläufige Adresse als feste Adresse festzulegen.

9. BUS-System (2) nach Anspruch 8, bei dem die Teilnehmer (4) ferner dazu ausgelegt sind, einen innerhalb der zweiten Wartezeit auftretenden Konflikt, anhand eines Vergleichs zwischen dem eigenen Hierarchie-Status und einem Hierarchie-Status des Absenders zu lösen.

10. BUS-System (2) nach einem der vorhergehenden Ansprüche, bei dem die Teilnehmer (4) des BUS-Systems dazu ausgelegt sind, sofern diese über eine feste Adresse verfügen, in Reaktion auf ein Adress-Telegramm eines weiteren Teilnehmers (4), welches eine Adresse umfasst, die mit der festen Adresse in Konflikt steht, die eigene feste Adresse beizubehalten und ein Adress-Telegramm, welches diese feste Adresse umfasst, an die übrigen Teilnehmer (4) des BUS-Systems zu übermitteln.

11. BUS-System (2) nach einem der vorhergehenden Ansprüche, wobei es sich bei dem BUS-System (2) um ein zu CAN kompatibles Feldbus-System oder um ein Feldbus-System handelt, welches auf CANopen basiert oder zu CANopen kompatibel ist.

12. Fluidisches System (1) umfassend ein BUS-System (2) nach einem der vorhergehenden Ansprüche, wobei zumindest ein Anteil der Teilnehmer (4) fluidische Komponenten sind.

13. Verfahren zum Betrieb eines BUS-Systems (2) mit einer Vielzahl von Teilnehmern (4), wobei den Teilnehmern (4) des BUS-Systems (2) Informationen bezüglich einer Zuordnungseigenschaft von anderen Teilnehmern (4) einer Gruppe des BUS-Systems (4) und von den entsprechenden Teilnehmern (4) der Gruppe selbst übermittelt werden, **dadurch gekennzeichnet, dass** es sich bei dem Bussystem um ein Feldbussystem handelt und die Gruppe alle Teilnehmer (4) des BUS-Systems (2) umfasst, die Teilnehmer (4) des BUS-Systems (2) hinsichtlich ihrer Netzwerkfunktionalität gleichwertig arbeiten und die Informationen bezüglich der Zuordnungseigenschaft der Teilnehmer (4) eine Adresse dieser Teilnehmer (4) innerhalb des BUS-Systems (2) sind und das BUS-System (2) außerdem keinen Teilnehmer (4) umfasst, welcher entsprechend einer Master-Funktionalität arbeitet.

14. Verfahren zum Betrieb eines BUS-Systems (2) nach Anspruch 13 , bei dem zumindest die Teilnehmer (4) der Gruppe des BUS-Systems (2) die empfangenen Informationen bezüglich der Zuordnungseigenschaft der anderen Teilnehmer (4) als vollständige Grundlage für eine Kommunikation mit diesen Teilnehmern (4) innerhalb des BUS-Systems (2) kumulativ speichern und lokal hinterlegen.

## Claims

1. A BUS system (2) comprising a multitude of users (4), wherein information regarding an allocation feature is transmitted to the users of the BUS system by the other users (4) of a group of users of the BUS system and by the respective users (4) of the group themselves, **characterized in that** the bus system is a field bus system and the group comprises all users of the BUS system, the users (2) of the BUS system (4) are equivalent with regard to their network functionality, and the information regarding the allocation feature of the users of the group is an address of these users (4) within the BUS system (2), and the BUS system comprises no user (4) having a master functionality.

2. The BUS system (2) according to claim 1, wherein at least the users (4) of the group of the BUS system (2) are designed to cumulatively store and locally deposit the received information regarding the allocation feature of the other users (4) as a complete basis for a communication with these users (4) within the BUS system (2).

3. The BUS system (2) according to claim 1 or 2, wherein the users (4) are further designed to generate a random preliminary address of their own such that this address is different from each of the cumulatively stored addresses of the other users (4).

4. The BUS system (2) according to claim 3, wherein the users (4) are designed to transmit their address in an address telegram to the other users (4) of the BUS system (2).

5. The BUS system according to claim 4, wherein the address telegram furthermore comprises information about a hierarchy status of the sending user within an overall hierarchy of the BUS system.

6. The BUS system according to claim 5, wherein at least one recipient of the address telegram is designed to check the address present in the address telegram received for a conflict with its own preliminary address and, in case of a conflict, to read out a status information of the sender that is present in the address telegram received, and
(a) if its own hierarchy status in an overall hierarchy of the BUS system (2) ranks lower than the hierarchy status of the sender as stated in the address telegram, to give up its own preliminary address, to generate a new random preliminary address and to transmit it to the other users (4) of the BUS system (2) in a further address telegram;
(b) if its own hierarchy status in an overall hierarchy of the BUS system (2) ranks higher than the hierarchy status of the sender as stated in the address telegram, to maintain its own address and to transmit this maintained address to the other users (2) of the BUS system in a further address telegram.

7. The BUS system according to claim 6, wherein the users (4) are designed to transmit an address telegram to the other users (4) of the BUS system (2) after a randomly determined first waiting time has elapsed.

8. The BUS system (2) according to claim 7, wherein the users (4) are designed to observe a randomly determined second waiting time after having sent at least a first address telegram, to check any address telegrams of other users (2) coming in during this second waiting time with a view to a conflict with their own preliminary address and, if they do not receive an address telegram within the second waiting time which causes a conflict, to define their preliminary address as a fixed address.

9. The BUS system (2) according to claim 8, wherein the users (4) are further designed to resolve any conflict occurring within the second waiting time by means of a comparison between their own hierarchy status and a hierarchy status of the sender.

10. The BUS system (2) according to any of the preceding claims, wherein the users (4) of the BUS system, provided they have a fixed address, are designed to maintain their own fixed address and to transmit an address telegram comprising this fixed address to the other users (4) of the BUS system in response to an address telegram of a further user (4) which comprises an address that is in conflict with the fixed address.

11. The BUS system (2) according to any of the preceding claims, wherein the BUS system (2) is a CAN-compatible field bus system or a field bus system that is CANopen-based or compatible with CANopen.

12. A fluidic system (1) comprising a BUS system (2) according to any of the preceding claims, wherein at least part of the users (4) are fluidic components.

13. A method of operating a BUS system (2) comprising a multitude of users (4), wherein information regarding an allocation feature is transmitted to the users (4) of the BUS system (2) by other users (4) of a group of the BUS system (2) and by the respective users (4) of the group themselves, **characterized in that** the bus system is a field bus system and the group comprises all users (4) of the BUS system (2), the users (4) of the BUS system (2) operate equivalently with regard to their network functionality, and the information regarding the allocation feature of the users (4) is an address of these users (4) within the BUS system (2) and, in addition, the BUS system (2) comprises no user (4) which operates in accordance with a master functionality.

14. The method of operating a BUS system (2) according to claim 13, wherein at least the users (4) of the group of the BUS system (2) cumulatively store and locally deposit the received information regarding the allocation feature of the other users (4) as a complete basis for a communication with these users (4) within the BUS system (2).

## Revendications

1. Système de BUS (2) présentant une pluralité de participants (4), des informations concernant une propriété d'affectation étant transmises aux participants du système de BUS par les autres participants (4) d'un groupe de participants du système de BUS et par les participants correspondants (4) du groupe eux-mêmes, **caractérisé en ce que** le système de bus est un système de bus de terrain et **en ce que** le groupe comprend tous les participants du système de BUS, les participants (2) du système de BUS (4) étant équivalents en ce qui concerne leur fonctionnalité de réseau, et l'information concernant la propriété d'affectation des participants du groupe étant une adresse de ces participants (4) dans le système de BUS (2), et le système de BUS ne comprenant pas de participant (4) à fonctionnalité maître.

2. Système de BUS (2) selon la revendication 1, dans lequel au moins les participants (4) du groupe du système de BUS (2) sont aménagés de manière à mémoriser de manière cumulative et à déposer localement les informations reçues concernant la propriété d'affectation des autres participants (4) en tant que base complète pour une communication avec ces participants (4) dans le système de BUS (2).

3. Système de BUS (2) selon la revendication 1 ou 2, dans lequel les participants (4) sont en outre aménagés de manière à générer leur propre adresse aléatoire provisoire de sorte que celle-ci est différente de chacune des adresses des autres participants (4) mémorisées de manière cumulative.

4. Système de BUS (2) selon la revendication 3, dans lequel les participants (4) sont aménagés de manière à transmettre leur adresse aux autres participants (4) du système de BUS (2) dans un télégramme d'adresse.

5. Système de BUS selon la revendication 4, dans lequel le télégramme d'adresse comprend en outre des informations concernant un état d'hiérarchie du participant émetteur dans une hiérarchie totale du système de BUS.

6. Système de BUS selon la revendication 5, dans lequel au moins un récepteur du télégramme d'adresse est aménagé de manière à vérifier l'adresse présente dans le télégramme d'adresse reçu quant à un conflit avec sa propre adresse provisoire, et, dans le cas d'un conflit, à lire une information d'état de l'émetteur présente dans le télégramme d'adresse reçu et
a) à abandonner sa propre adresse provisoire, à générer une nouvelle adresse aléatoire provisoire et à la transmettre aux autres participants (4) du système de BUS (2) dans un autre télégramme d'adresse si son propre état d'hiérarchie présente un rang dans une hiérarchie totale du système de BUS (2) qui est inférieur à celui de l'état d'hiérarchie de l'émetteur mentionné dans le télégramme d'adresse,
b) à conserver sa propre adresse et à transmettre cette adresse conservée aux autres participants (2) du système de BUS dans un autre télégramme d'adresse si son propre état d'hiérarchie présente un rang dans une hiérarchie totale du système de BUS (2) qui est supérieur à celui de l'état d'hiérarchie de l'émetteur mentionné dans le télégramme d'adresse.

7. Système de BUS selon la revendication 6, dans lequel les participants (4) sont aménagés de manière à transmettre un télégramme d'adresse aux autres participants (4) du système de BUS (2) après l'écoulement d'un premier temps d'attente aléatoirement déterminé.

8. Système de BUS (2) selon la revendication 7, dans lequel les participants (4) sont aménagés de manière à respecter un deuxième temps d'attente aléatoirement déterminé après avoir transmis au moins un premier télégramme d'adresse, à vérifier des télégrammes d'adresse d'autres participants (2) reçus pendant ce deuxième temps d'attente quant à un conflit avec la propre adresse provisoire, et à fixer leur adresse provisoire comme adresse fixe s'ils ne reçoivent pas de télégramme d'adresse générant un conflit pendant le deuxième temps d'attente.

9. Système de BUS (2) selon la revendication 8, dans lequel les participants (4) sont en outre aménagés de manière à résoudre un conflit survenant pendant le deuxième temps d'attente à l'aide d'une comparaison entre leur propre état d'hiérarchie et un état d'hiérarchie de l'émetteur.

10. Système de BUS (2) selon l'une des revendications précédentes, dans lequel les participants (4) du système de BUS, lorsqu'ils possèdent une adresse fixe, sont aménagés de manière à conserver leur propre adresse fixe en réponse à un télégramme d'adresse d'un autre participant (4) comprenant une adresse en conflit avec l'adresse fixe, et à transmettre un télégramme d'adresse comprenant cette adresse fixe aux autres participants (4) du système de BUS.

11. Système de BUS (2) selon l'une des revendications précédentes, le système de BUS (2) étant un système de bus de terrain compatible avec CAN ou un système de bus de terrain basé sur CANopen ou compatible avec CANopen.

12. Système fluidique (1) comprenant un système de BUS (2) selon l'une des revendications précédentes, au moins une partie des participants (4) étant des composants fluidiques.

13. Procédé de mise en oeuvre d'un système de BUS (2) comprenant une pluralité de participants (4), des informations concernant une propriété d'affectation étant transmises aux participants (4) du système de BUS (2) par les autres participants (4) d'un groupe du système de BUS (4) et par les participants correspondants (4) du groupe eux-mêmes, **caractérisé en ce que** le système de bus est un système de bus de terrain et **en ce que** le groupe comprend tous les participants (4) du système de BUS (2), les participants (4) du système de BUS (2) fonctionnant de manière équivalente en ce qui concerne leur fonctionnalité de réseau, et les informations concernant la propriété d'affectation des participants (4) étant une adresse de ces participants (4) dans le système de BUS (2), et le système de BUS (2) ne comprenant en outre pas de participant (4) fonctionnant selon une fonctionnalité maître.

14. Procédé de mise en oeuvre d'un système de BUS (2) selon la revendication 13, dans lequel au moins les participants (4) du groupe du système de BUS (2) mémorisent de manière cumulative et déposent localement les informations reçues concernant la propriété d'affectation des autres participants (4) en tant que base complète pour une communication avec ces participants (4) dans le système de BUS (2).
